# EUROPEAN PATENT APPLICATION

(11) **EP 4 546 534 A1**
(43) Date of publication of application: **30.04.2025**
(21) Application number: 24173352.6
(22) Date of filing: 30.04.2024
(51) Int. Cl.: H01M 50/264

(54) **BATTERY MODULE**

(30) Priority: 23.10.2023 KR 20230141972
(71) Applicant: Samsung SDI Co., Ltd., Yongin-si, Gyeonggi-do 17084 (KR)
(72) Inventor: Hwang, Yu Sik, 16678 Suwon-si, Gyeonggi-do (KR)
(74) Representative: Gulde & Partner

(57) **Abstract**

The present disclosure provides a battery module (1) capable of preventing battery cells (100) from serially exploding. The battery module (1) includes a plurality of battery cells (100) arranged along a first direction (X), a pair of first plates (200) disposed to face the battery cells (100) and disposed parallel to the first direction (X), a pair of second plates (300) disposed to face the battery cells (100) and disposed parallel to a second direction (Y) intersecting the first direction (X), a buffer member (400) provided between any one of the first plates (200) and any one of the second plates (300) and configured to move the second plate (300) relative to the first plate (200) in a direction parallel to the first direction (X) when a battery cell (100) explodes, and a holder connected to the buffer member (400) and configured to selectively limit movement of the second plate (300) relative to the first plate (200).

## Description

### BACKGROUND

### 1. Field of the Invention

The present disclosure relates to a battery module.

### 2. Discussion of Related Art

Secondary batteries are batteries capable of being charged and discharged, unlike primary batteries that are not capable of being recharged. Low-capacity secondary batteries may be used in small, portable electronic devices such as smartphones, feature phones, laptop computers, digital cameras, and camcorders, while high-capacity secondary batteries are widely used as power sources for driving motors of hybrid vehicles, electric vehicles, or the like, and as batteries for power storage. The secondary battery includes an electrode assembly having a positive electrode and a negative electrode, a case accommodating the positive electrode and the negative electrode, an electrode terminal connected to the electrode assembly, and the like.

The aforementioned information disclosed in this background section is provided for enhancement of understanding of the background technology of the present disclosure, and therefore may contain information that does not constitute the related art.

### SUMMARY OF THE INVENTION

An aspect of embodiments of the present disclosure is directed to providing a battery module capable of preventing battery cells from serially exploding.

These and other aspects and features of the present disclosure will be described in or will be apparent from the following description of some embodiments of the present disclosure.

According to one or more embodiments, a battery module includes: a plurality of battery cells arranged along a first direction, a pair of first plates disposed to face the battery cells and disposed parallel to the first direction, a pair of second plates disposed to face the battery cells and disposed parallel to a second direction intersecting the first direction, a buffer member provided between any one of the first plates and any one of the second plates (e.g., between at least one first plate of the pair of first plates and one second plate of the pair of second plates) and configured to move the second plate relative to the first plate in a direction parallel to the first direction when a battery cell explodes, and a holder connected to the buffer member and configured to selectively limit relative movement of the second plate with respect to the first plate.

A gap between the pair of first plates may be smaller than a width of the second plate parallel to the second direction.

The buffer member may be elastically deformable.

The buffer member may include a first part connected to the first plate, a second part disposed to face the first part and connected to the second plate, and a connection part disposed between the first part and the second part.

Both ends of the connection part (e.g., a first end and a second end) may be connected to the first part and the second part, respectively, and may extend in a curved manner at a set (e.g., predetermined) curvature.

The first part and the second part may be disposed so that longitudinal directions thereof are parallel to the first direction.

The first part and the second part may be spaced apart along the second direction.

When the battery cell explodes, a length of the first part may decrease, a length of the second part may increase, and the connection part may move in the direction parallel to the first direction.

The battery module may further include a plurality of slits arranged along an extension direction of the buffer member.

Each of the slits may be recessed from an outer surface of the buffer member.

The holder may include a first holder configured to support the first part and the second part with respect to the first plate, and a second holder spaced apart from the first holder and configured to support the connection part with respect to the first plate.

The first holder may include a first holder body, a first insertion groove formed to be recessed into the first holder body and into which the first part is inserted, and a second insertion groove formed to be recessed into the first holder body and into which the second part is inserted, and the first part and the second part may be separated from the first insertion groove and the second insertion groove, respectively, as a pressure equal to or greater than a set amount is applied to the second plate.

The first holder body may include a first fixed body fixed to the first plate and a first extension body extending from the first fixed body in a direction parallel to the second direction, and the first insertion groove and the second insertion groove may be formed in the first extension body.

The first extension body may be elastically deformable.

The first extension body may be separated from the first fixed body as a pressure equal to or greater than a set amount is applied to the second plate.

The first holder may further include a first notch formed to be recessed into the first extension body, and spaced apart from the first insertion groove and the second insertion groove.

The second holder may include a second holder body spaced apart from the first holder, an accommodating groove disposed inside the second holder body and into which the connection part is inserted, and a support member configured to support the connection part inside the accommodating groove, and the connection part may be separated from the accommodating groove and the support member as a pressure equal to or greater than a set amount is applied to the second plate.

The support member may be elastically deformable.

The second holder body may include a second fixed body fixed to the first plate, and a second extension body extending from the second fixed body and disposed to surround the connection part, and the second extension body may be separated from the second fixed body as a pressure equal to or greater than a set amount is applied to the second plate.

The second holder may further include a second notch recessed in the second extension body.

In accordance with one or more embodiments of the present disclosure, when a battery cell explodes due to overcharging, etc., the second plate is relatively moved in a direction away from the first plate, thereby reducing an amount of pressure applied to the battery cell.

In accordance with one or more embodiments of the present disclosure, chain ignition of adjacent battery cells can be prevented by securing a space on both (e.g., opposite) sides of an exploded battery cell to delay heat propagation.

However, aspects and effects obtainable through the present disclosure are not limited to the above aspects and effects, and other technical aspects and effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a perspective view schematically illustrating a configuration of a battery module according to an embodiment of the present disclosure;
FIG. 2 is an exploded perspective view schematically illustrating the configuration of the battery module according to an embodiment of the present disclosure;
FIG. 3 is a plan view schematically illustrating the configuration of the battery module according to an embodiment of the present disclosure;
FIG. 4 is a side view schematically illustrating the configuration of the battery module according to an embodiment of the present disclosure;
FIG. 5 is a front view schematically illustrating the configuration of the battery module according to an embodiment of the present disclosure;
FIG. 6 is a perspective view schematically illustrating a configuration of a battery cell according to an embodiment of the present disclosure;
FIG. 7 is a cross-sectional view schematically illustrating the configuration of the battery cell according to an embodiment of the present disclosure;
FIG. 8 is an enlarged view schematically illustrating a configuration of a buffer member according to an embodiment of the present disclosure;
FIG. 9 is a view schematically illustrating a configuration of a slit according to an embodiment of the present disclosure;
FIG. 10 is a cross-sectional view schematically illustrating a configuration of a first holder according to an embodiment of the present disclosure;
FIG. 11 is a front cross-sectional view schematically illustrating a configuration of a second holder according to an embodiment of the present disclosure;
FIG. 12 is a plan cross-sectional view schematically illustrating the configuration of the second holder according to an embodiment of the present disclosure; and
FIGS. 13 to 18 are views schematically illustrating an operation process of a battery module according to an embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

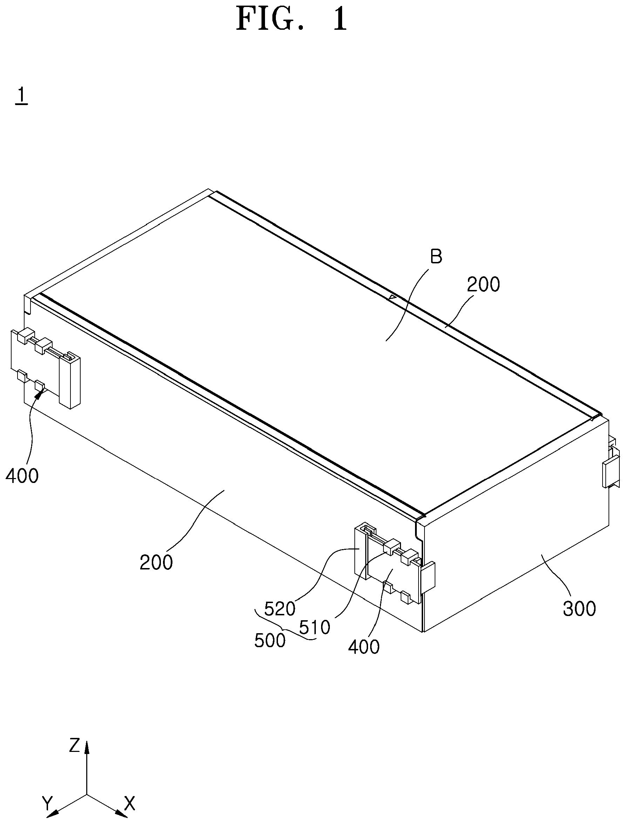

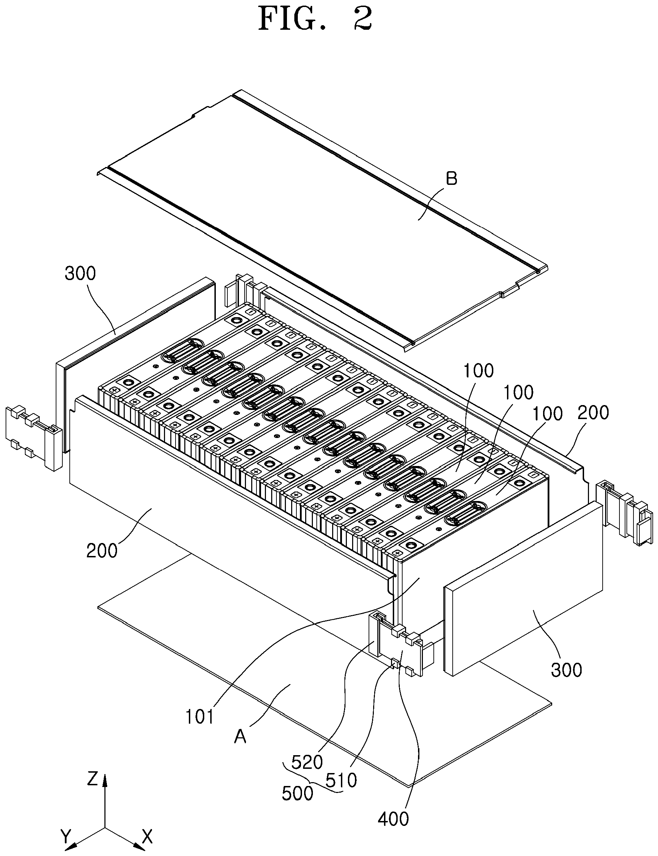

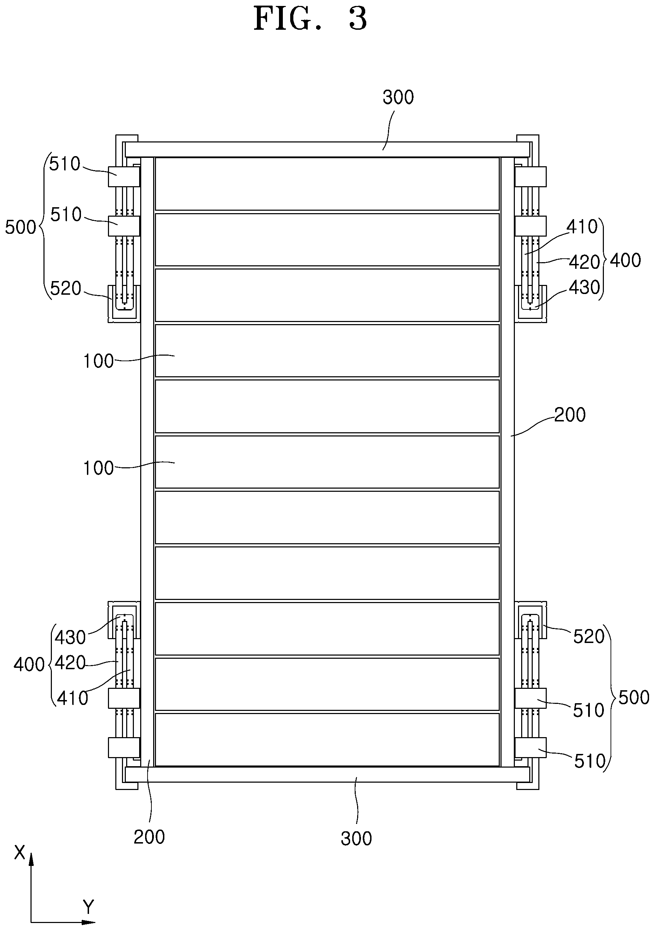

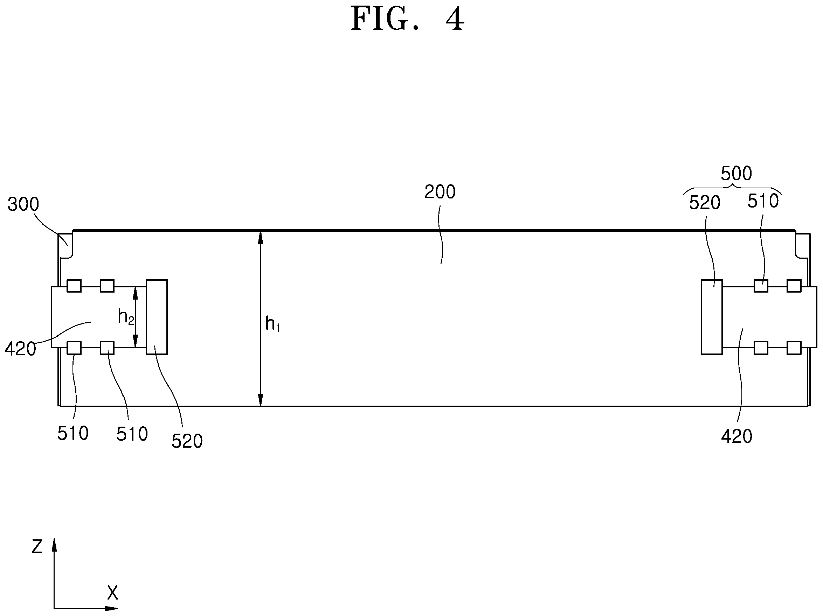

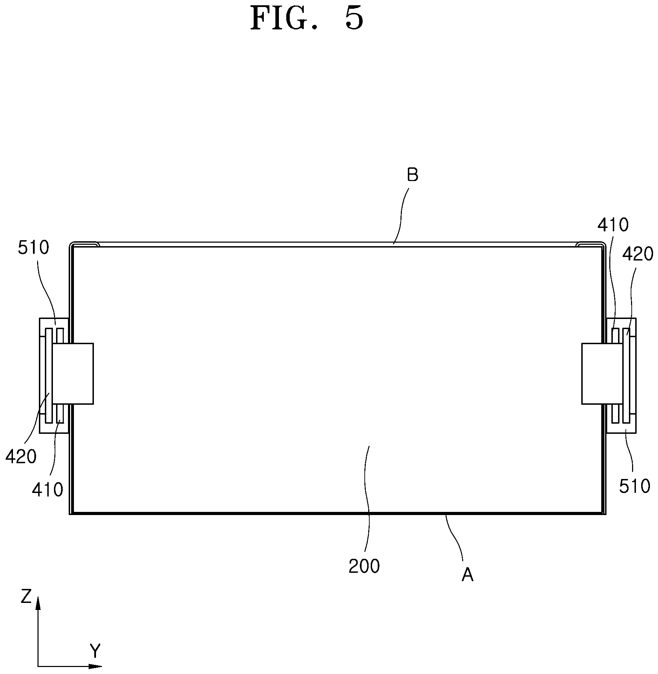

FIG. 1 is a perspective view schematically illustrating a configuration of a battery module according to an embodiment of the present disclosure, FIG. 2 is an exploded perspective view schematically illustrating the configuration of the battery module according to an embodiment of the present disclosure, FIG. 3 is a plan view schematically illustrating the configuration of the battery module according to an embodiment of the present disclosure, FIG. 4 is a side view schematically illustrating the configuration of the battery module according to an embodiment of the present disclosure, and FIG. 5 is a front view schematically illustrating the configuration of the battery module according to an embodiment of the present disclosure.

Referring to FIGS. 1 to 5, a battery module 1 according to the present embodiment includes a battery cell 100, a first plate 200, a second plate 300, a buffer member 400, and a holder 500.

The battery cell 100 may function as a unit structure that stores and supplies power in the battery module 1.

The battery cell 100 may include at least one electrode assembly 10 formed by winding a positive electrode 11 and a negative electrode 12 with a separator 13, which is an insulator, interposed therebetween, a case 20 in which the electrode assembly 10 is installed, and a cap assembly 30 coupled to an opening of the case 20.

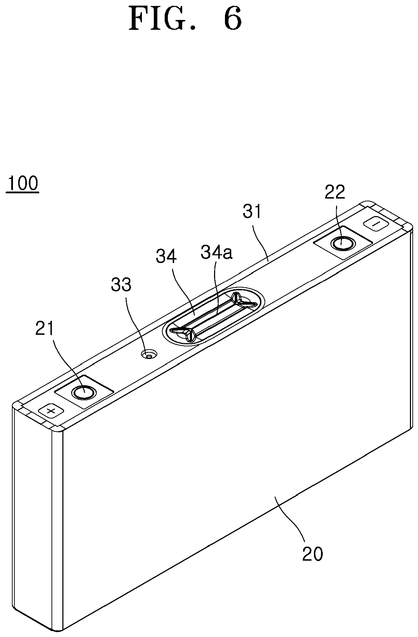

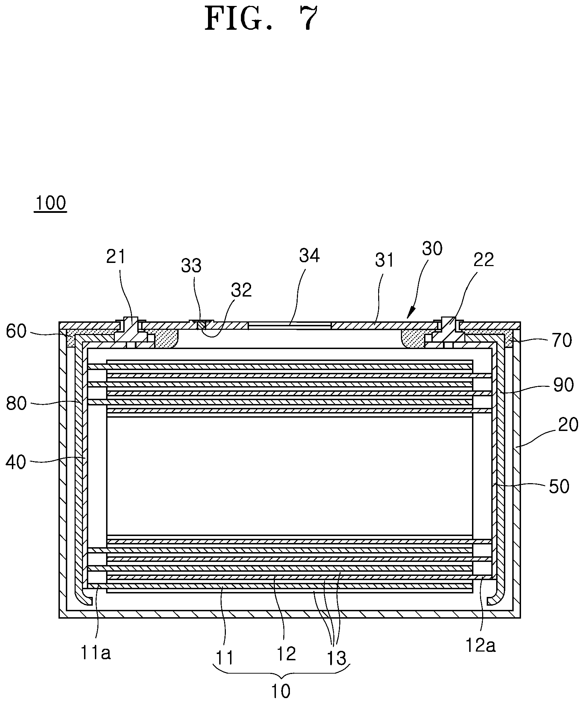

FIG. 6 is a perspective view schematically illustrating a configuration of a battery cell according to an embodiment of the present disclosure, and FIG. 7 is a cross-sectional view schematically illustrating the configuration of the battery cell according to an embodiment of the present disclosure.

Referring to FIGS. 6 and 7, the battery cell 100 according to the present embodiment will be described as a lithium-ion secondary battery having a prismatic shape by way of example. However, the present disclosure is not limited thereto, and the battery cell 100 may be a lithium polymer battery or a cylindrical battery, for example.

The positive electrode 11 and the negative electrode 12 may include a coated portion that is a region where an active material is applied on a current collector formed of a thin metal foil and uncoated portions 11a and 12a that are regions that are not coated with the active material.

The positive electrode 11 and the negative electrode 12 may be wound after interposing the separator 13, which is an insulator, therebetween. However, the present disclosure is not limited thereto, and the electrode assembly 10 may have a structure in which positive electrodes and negative electrodes composed of a plurality of sheets are alternately stacked with a separator interposed therebetween.

The case 20 forms the overall exterior of the battery cell 100 and may be made of a conductive metal such as aluminum, an aluminum alloy, or nickel-plated steel. In addition, the case 20 may provide a space in which the electrode assembly 10 is accommodated.

The cap assembly 30 may include a cap plate 31 that covers the opening of the case 20, and the case 20 and the cap plate 31 may be made of a conductive material. Positive and negative electrode terminals 21 and 22 electrically connected to the positive electrode 11 or the negative electrode 12 may be installed to protrude outward through the cap plate 31.

In an embodiment, an outer peripheral surface of an upper pillar of the positive and negative terminals 21 and 22 protruding outward from the cap plate 31 may be threaded and fixed to the cap plate 31 with a nut.

However, the present disclosure is not limited thereto, and the positive and negative terminals 21 and 22, for example, may have a rivet structure so as to be riveted, or may be welded to the cap plate 31.

In an embodiment, the cap plate 31 may be made of a thin plate and coupled to the opening of the case 20, and in the cap plate 31, an electrolyte inlet 32 where a sealing stopper 33 is to be installed may be formed and a vent 34 in which a notched part 34a is formed may be installed.

The positive and negative electrode terminals 21 and 22 may be electrically connected to current collectors including first and second current collectors 40 and 50 (hereinafter referred to as "positive and negative current collectors") that are coupled by welding to the positive uncoated region 11a or the negative uncoated region 12a.

For example, the positive and negative electrode terminals 21 and 22 may be coupled to the positive and negative current collectors 40 and 50 by welding. However, the present disclosure is not limited thereto, and the positive and negative electrode terminals 21 and 22 and the positive and negative current collectors 40 and 50 may be formed by being integrally combined.

In an embodiment, an insulating member may be installed between the electrode assembly 10 and the cap plate 31. The insulating member may include first and second lower insulating members 60 and 70, and each of the first and second lower insulating members 60 and 70 may be installed between the electrode assembly 10 and the cap plate 31.

In an embodiment, according to the present embodiment, one end of a separating member that is capable of being installed to face one side surface of the electrode assembly 10 may be installed between the insulating member and the positive or negative electrode terminal 21 or 22.

In an embodiment, the separating member may include a first separating member 80 and a second separating member 90.

Therefore, respective ends of the first and second separating members 80 and 90 that are capable of being installed to face side surfaces of the electrode assembly 10 may be installed between the first lower insulating member 60 and the positive electrode terminal 21 and between the second lower insulating member 70 and the negative electrode terminal 22.

As a result, the positive and negative electrode terminals 21 and 22 coupled by welding to the positive and negative current collectors 40 and 50 may be coupled to the first and second lower insulating members 60 and 70 and the one ends of the first and second separating members 80 and 90.

A plurality of battery cells 100 may be provided. The plurality of battery cells 100 may be arranged in a row along a first direction. The number of battery cells 100 is not limited to the number illustrated in FIG. 2, and the design may be changed in various ways depending on the size of the battery module 1 or the like.

The first direction to be described below may refer to a direction parallel to an X-axis direction based on FIG. 1. Furthermore, a second direction may refer to a direction intersecting the first direction. As an example, the second direction may refer to a direction perpendicular to the first direction and parallel to a Y-axis direction based on FIG. 1.

The plurality of battery cells 100 may be electrically connected to each other through a bus bar (not illustrated). In this case, the plurality of battery cells 100 may be connected in series or in parallel.

A front surface and a back surface of the battery cell 100 described below may refer to a surface disposed perpendicular to the X-axis or the first direction based on FIG. 1, a side surface of the battery cell 100 may refer to a surface disposed perpendicular to the Y-axis or the second direction based on FIG. 1, and upper and lower surfaces of the battery cell 100 may refer to surfaces disposed perpendicular to a Z-axis based on FIG. 1.

Each of the first plates 200 may be disposed to face a side surface of the battery cell 100. The first plate 200 may function as a component for supporting the battery cell 100 in the second direction and protecting the battery cell 100 from external shocks, foreign substances, and the like.

The first plate 200 may be formed to have approximately the shape of a plate. A length of the first plate 200 may extend along the first direction in length, and the first plate 200 may be disposed parallel to a side surface of the battery cell 100.

A pair of first plates 200 may be provided. The pair of first plates 200 may be disposed to be spaced apart from each other along the second direction. The pair of first plates 200 may be disposed such that their inner surfaces individually face both side surfaces of any one battery cell 100. The inner surfaces of the pair of first plates 200 may be in direct contact with the side surfaces of the battery cells 100. The length of the first plate 200 may be greater than a sum of lengths of side surfaces on either side of the plurality of battery cells 100. Accordingly, the inner surface of the first plate 200 may be in contact with all of the side surfaces of the plurality of battery cells 100.

The first plate 200 may contain a material with high rigidity, such as metal, high-strength plastic, or the like, to prevent damage and breakage caused by an external force applied from the outside, pressure applied from the battery cells 100, and the like. The inner surface of the first plate 200 that is in direct contact with the battery cells 100 may be made of an insulating material so that the first plate 200 is electrically separated from the battery cells 100.

The second plate 300 may be disposed to intersect the first plate 200 and face a front or back surface of the battery cell 100. The second plate 300 may function as a component for supporting the battery cell 100 in the first direction and protecting the battery cell 100 from external shocks, foreign substances, and the like.

The second plate 300 may be formed to have approximately the shape of a plate. The second plate 300 may extend in a direction parallel to the second direction in length and may be disposed parallel to the front and back surfaces of the battery cell 100.

A pair of second plates 300 may be provided. The pair of second plates 300 may be disposed to be spaced apart from each other along the first direction. The pair of second plates 300 may be disposed such that inner surfaces thereof individually face a front surface of a battery cell 100 disposed at one end among the plurality of battery cells 100 arranged along the first direction and a back surface of a battery cell 100 disposed at the other end. The inner surfaces of the pair of second plates 300 may be in direct contact with the front and back surfaces of the front and rear battery cells 100. A length of the second plate 300 may be greater than a length of the front surface or back surface of the battery cell 100 parallel to the second direction. Accordingly, the inner surface of the first plate 200 may contact an entire area of the front surface or back surface of the battery cell 100.

The second plate 300 may be connected to a pair of first plates 200 at both ends through the buffer members 400, which will be described below.

The second plate 300 may contain a material with high rigidity, such as metal, high-strength plastic, or the like, to prevent damage and breakage caused by an external force applied from the outside, pressure applied from the battery cells 100, and the like. The inner surface of the second plate 300 that is in direct contact with the battery cell 100 may be made of an insulating material so that the second plate 300 is electrically separated from the battery cell 100.

The battery module 1 according to the present embodiment may further include a bottom plate A and a top plate B.

The bottom plate A and the top plate B may be disposed to be spaced apart in a vertical direction with the battery cells 100 therebetween.

The bottom plate A may be formed to have approximately the shape of a plate and may be disposed to face lower surfaces of the battery cells 100. An upper surface of the bottom plate A may be in direct contact with the lower surfaces of the battery cells 100.

The bottom plate A may contain a material with high rigidity such as metal, high-strength plastic, or the like, to prevent damage and breakage caused by an external force applied from the outside, pressure applied from the battery cells 100, and the like. The upper surface of the bottom plate A that is in direct contact with the battery cells 100 may be made of an insulating material so that the bottom plate A is electrically separated from the battery cells 100.

A lower portion of the first plate 200 may be coupled to the bottom plate A. In this case, the first plate 200 may be coupled to the bottom plate A by various types of coupling methods such as bolting, welding, adhesion, insertion coupling, and lock coupling, or the like.

A lower portion of the second plate 300 may be separated from the bottom plate A or may be slidably connected to the bottom plate A. Accordingly, the second plate 300 may be moved relative to the first plate 200 by the operation of the buffer member 400, which will be described below.

The top plate B may be formed to have approximately the shape of a plate and may be disposed to face upper surfaces of the battery cells 100. The top plate B may be disposed so that a lower surface thereof faces the upper surfaces of the battery cells 100 at a predetermined distance apart.

The top plate B may contain a material with high rigidity such as metal, high-strength plastic, or the like, to prevent damage and breakage caused by an external force applied from the outside, pressure applied from the battery cells 100, and the like. The lower surface of the top plate B that is in direct contact with the battery cells 100 may be made of an insulating material so that the top plate B is electrically separated from the battery cells 100.

An upper portion of the first plate 200 may be coupled to the top plate B. In this case, the first plate 200 may be coupled to the top plate B by various types of coupling methods such as bolting, welding, adhesion, insertion coupling, and lock coupling, or the like.

An upper portion of the second plate 300 may be separated from the top plate B or may be slidably connected to the top plate B. Accordingly, the second plate 300 may be moved relative to the first plate 200 by the operation of the buffer member 400, which will be described below.

The buffer members 400 may be provided between the first plate 200 and the second plate 300, and both sides thereof may be connected to the first plate 200 and the second plate 300, respectively. The buffer member 400 may support the second plate 300 with respect to the first plate 200 when the battery cells 100 normally operate. The buffer member 400 may move the second plate 300 relative to the first plate 200 in a direction parallel to the first direction when a battery cell 100 explodes caused by overcharging, fire, or the like. More specifically, when any one of the battery cells 100 explodes, the buffer member 400 may change its shape by pressure transmitted along the direction parallel to the first direction based on the corresponding battery cell 100, and may move the second plate 300 in a direction away from the first plate 200 through the shape deformation. Accordingly, when the battery cell 100 explodes, the buffer member 400 may expand the internal space of the battery module 1 in a direction in which explosion pressure is transmitted, thereby reducing an amount of pressure applied to the remaining battery cells 100. In addition, when one of the battery cells 100 explodes, the buffer member 400 may secure a space for delaying thermal propagation on both sides of the battery cell 100, thereby preventing a chain ignition of adjacent battery cells 100.

A plurality of buffer members 400 may be provided. The plurality of buffer members 400 may be individually disposed between each end of the pair of first plates 200 and each end of the pair of second plates 300. As an example, four buffer members 400 may be formed and individually disposed on each corner of the battery module 1 surrounded by the pair of first plates 200 and the pair of second plates 300.

The buffer member 400 may be provided to be elastically deformable. For example, the buffer member 400 may have the form of a thin plate made of a flexible metal or plastic material, or may be made of a flexible material such as rubber, silicone, or the like. Accordingly, the shape of the buffer member 400 may vary depending on the pressure generated when a battery cell 100 explodes and move the second plate 300 relative to the first plate 200.

A height h2 of the buffer member 400 may be smaller than a height h₁ of the first plate 200. As an example, a ratio h₂/h₁ of the height h₂ of the buffer member 400 to the height h₁ of the first plate 200 may be 60% or more and 80% or less. More preferably, the ratio h₂/h₁ of the height h₂ of the buffer member 400 to the height h1 of the first plate 200 may be 70%. When the ratio h₂/h₁ of the height h₂ of the buffer member 400 to the height h₁ of the first plate 200 is 60% or less, a supporting force of the buffer member 400 supporting the second plate 300 with respect to the first plate 200 may be excessively reduced. In addition, when the ratio h₂/h₁ of the height h₂ of the buffer member 400 to the height h₁ of the first plate 200 is 80% or more, the shape deformation of the buffer member 400 may not be smoothly performed.

A gap between the pair of first plates 200 parallel to the second direction may be smaller than the width of the second plate 300 parallel to the second direction. Accordingly, the buffer member 400 may be disposed in a space surrounded by the pair of second plates 300 and any one of the first plates 200, thereby preventing the width of the battery module 1 from being excessively increased and preventing interference with adjacent components.

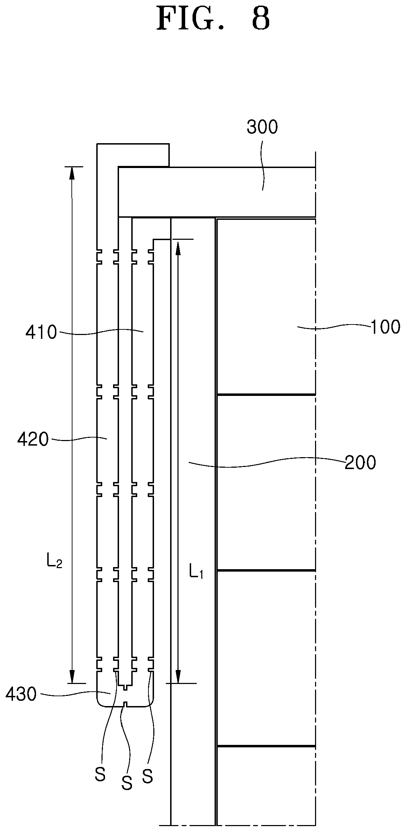

FIG. 8 is an enlarged view schematically illustrating a configuration of a buffer member according to an embodiment of the present disclosure.

Referring to FIG. 8, the buffer member 400 may include a first part 410, a second part 420, and a connection part 430.

The first part 410 may form an exterior of one side of the buffer member 400 and may be connected to the first plate 200. That is, the first part 410 may refer to a region between one end connected to the first plate 200 and one end of the connection part 430, which will be described below, among all regions of the buffer member 400.

The second part 420 may form an exterior of the other side of the buffer member 400 and may be connected to the second plate 300. That is, the second part 420 may refer to a region between one end connected to the second plate 300 and the other end of the connection part 430, which will be described below, among the all regions of the buffer member 400.

The first part 410 and the second part 420 may be disposed so that longitudinal directions thereof are parallel to the first direction. The first part 410 and the second part 420 may be disposed to be spaced apart from each other along the second direction. As an example, the second part 420 may be disposed to face the first plate 200 along the second direction with the first part 410 interposed therebetween.

When a battery cell 100 explodes, the first part 410 and the second part 420 may undergo a change in length and the second plate 300 may be moved relative to the first plate 200. As an example, when a battery cell 100 explodes, a length L₁ of the first part 410 may decrease, and a length L₂ of the second part 420 may increase. Here, the increase or decrease in the lengths of the first part 410 and the second part 420 does not mean that the lengths of the first part 410 and the second part 420 are directly expanded or contracted and thus the overall length of the buffer member 400 varies, but may mean that regions of the first part 410 and the second part 420 disposed to face each other along the second direction increase or decrease in a state where the overall length of the buffer member 400 is fixed.

The connection part 430 may be disposed between the first part 410 and the second part 420 and form an appearance of a central portion of the buffer member 400. The other end of the first part 410 not connected to the first plate 200 may be connected to one end of the connection part 430, and the other end of the second part 420 not connected to the second plate 300 may be connected to the other end of the connection part 430. That is, the connection part 430 may refer to all regions of the buffer member 400 excluding the first part 410 and the second part 420.

In an embodiment, the first part 410 and the second part 420 extend parallel to the first direction and are disposed to face each other along the second direction, and the connection part 430 may be formed to have an arc-shaped cross section that extends in a curved manner at a set curvature. However, the curvature of the connection part 430 may be designed in various ways depending on a gap between the first part 410 and the second part 420.

When a battery cell 100 explodes, the connection part 430 may be moved in the direction parallel to the first direction along with the second plate 300 due to the change in the lengths of the first part 410 and the second part 420. Here, the movement of the connection part 430 does not mean that the connection part 430 in an initial state directly moves, but may mean that a position of a region between the first part 410 and the second part 420 is changed in a process of increasing or decreasing the lengths of the regions of the first part 410 and the second part 420 in the state where the overall length of the buffer member 400 is fixed.

The battery module 1 according to an embodiment may further include slits S.

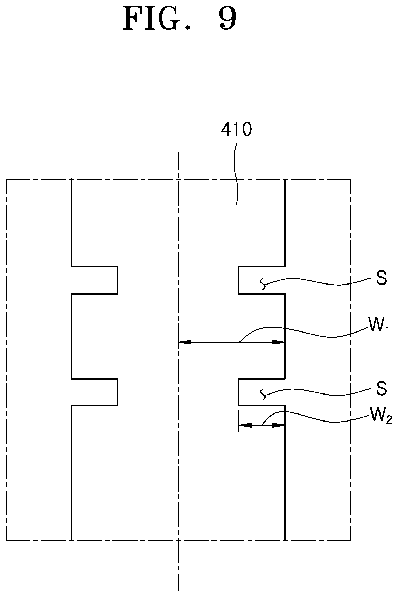

FIG. 9 is a view schematically illustrating a configuration of a slit according to an embodiment of the present disclosure.

The slit S may be formed to have the shape of a groove that is recessed from an outer surface of the buffer member 400. The slit S may function as a component for inducing smooth shape deformation of the buffer member 400 when a battery cell 100 explodes by weakening the initial rigidity of the buffer member 400.

A plurality of slits S may be provided. The plurality of slits S may be arranged along an extension direction of the buffer member 400. As an example, at least one of the plurality of slits S may be disposed in each of the first part 410, the second part 420, and the connection part 430.

A length from the outer surface of the buffer member 400 to a bottom surface of the slit S, that is, a size of a depth W₂ of the slit S, may be smaller than a size of a half width W₁ of the buffer member 400, more specifically, the first part 410 or the second part 420. As an example, a ratio W₂/W₁ of the depth W₂ of the slit S to the half width W₁ of the first part 410 or the second part 420 may be 15% or more and 20% or less. Accordingly, the slit S may prevent the rigidity of the buffer member 400 from being excessively weakened and at the same time induce smooth deformation of the buffer member 400.

The slit S may be moved along the extension direction of the buffer member 400 when the buffer member 400 is deformed due to the battery cell 100 exploding. As an example, any one slit S formed in the first part 410 may be moved in a direction from the first part 410 to the second part 420 through the connection part 430 due to a change in lengths of the first part 410 and the second part 420.

The holder 500 may be connected to the buffer member 400 and selectively limit the movement of the second plate 300 relative to the first plate 200. That is, the holder 500 may function as a component for limiting the movement of the second plate 300 relative to the first plate 200 by suppressing deformation of the buffer member 400 when the battery cells 100 operate normally and allowing the movement of the second plate 300 relative to the first plate 200 by allowing deformation of the buffer member 400 when a battery cell 100 explodes.

The holder 500 may include a first holder 510 and a second holder 520.

The first holder 510 may support the first part 410 and the second part 420 with respect to the first plate 200. A plurality of first holders 510 may be provided. The plurality of first holders 510 may be disposed to be spaced apart from each other along the first direction. FIGS. 1 to 4 show two first holders 510 by way of example, but the number of first holders 510 is not limited thereto, and the design may be changed to various numbers thereof, such as three or four.

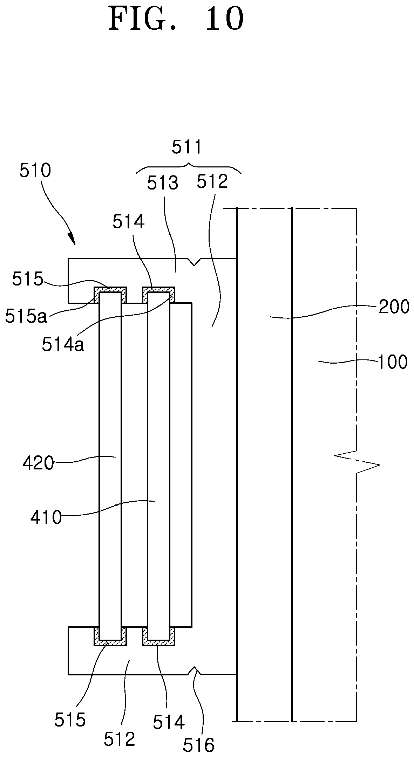

FIG. 10 is a cross-sectional view schematically illustrating a configuration of a first holder according to an embodiment of the present disclosure.

Referring to FIG. 10, the first holder 510 may include a first holder body 511, a first insertion groove 514, and a second insertion groove 515.

The first holder body 511 may substantially form an exterior of the first holder 510 and provide a space for accommodating the first part 410 and the second part 420 therein.

The first holder body 511 may include a first fixed body 512 and first extension bodies 513.

The first fixed body 512 may be fixed to the first plate 200 and support the first extension bodies 513, which will be described below. The first fixed body 512 may be formed to have a substantially flat shape. The first fixed body 512 may be disposed parallel to the first direction and disposed so that one surface thereof faces an outer surface of the first plate 200 in parallel. One surface of the first fixed body 512 may be in contact with the outer surface of the first plate 200 and fixed to the outer surface of the first plate 200 by various coupling methods such as bolting, welding, insertion coupling, or the like.

The first extension body 513 may extend from the first fixed body 512 and may be disposed to face the first part 410 and the second part 420. The first extension body 513 may be formed to have the shape of a plate extending from the first fixed body 512 in the direction parallel to the second direction. A pair of first extension bodies 513 may be provided. The pair of first extension bodies 513 may extend from an upper end and a lower end of the first fixed body 512, respectively, in the direction parallel to the second direction. The pair of first extension bodies 513 may be disposed so that inner surfaces thereof face upper ends and lower ends of the first part 410 and the second part 420, respectively.

The first insertion groove 514 may be formed to be recessed into the first holder body 511. More specifically, the first insertion groove 514 may have the shape of a groove formed to be recessed in a direction parallel to a vertical direction from an inner surface of the first extension body 513. The first insertion groove 514 may be disposed at a position vertically facing the first part 410. A pair of first insertion grooves 514 may be provided. The pair of first insertion grooves 514 may be formed in the pair of first extension bodies 513, respectively. The upper and lower ends of the first part 410 may be inserted into the pair of first insertion grooves 514, respectively.

A first joining member 514a for supporting the first part 410 with respect to the first insertion groove 514 may be disposed inside the first insertion groove 514. The first joining member 514a may be made of an elastically deformable material such as rubber, silicone, or the like. The first joining member 514a may fill an empty space between the first insertion groove 514 and the end of the first part 410, and may be in close contact with the first extension body 513 and the end of the first part 410 by its own elastic restoring force. Accordingly, the first joining member 514a may firmly fix the first part 410 to the first insertion groove 514.

The second insertion groove 515 may be formed to be recessed into the first holder body 511. More specifically, the second insertion groove 515 may have the shape of a groove formed to be recessed in the direction parallel to the vertical direction from the inner surface of the first extension body 513. The second insertion groove 515 may be disposed to be spaced apart from the first insertion groove 514 along the direction parallel to the second direction. The second insertion groove 515 may be disposed at a position vertically facing the second part 420. A pair of second insertion grooves 515 may be provided. The pair of second insertion grooves 515 may be formed in the pair of first extension bodies 513, respectively. The upper and lower ends of the second part 420 may be inserted into the pair of second insertion grooves 515, respectively.

A second joining member 515a for supporting the second part 420 with respect to the second insertion groove 515 may be disposed inside the second insertion groove 515. The second joining member 515a may be made of an elastically deformable material such as rubber, silicone, or the like. The second joining member 515a may fill an empty space between the second insertion groove 515 and the end of the second part 420, and may be in close contact with the first extension body 513 and the end of the second part 420 by its own elastic restoring force. Accordingly, the second joining member 515a may firmly fix the second part 420 to the second insertion groove 515.

However, the first part 410 and the second part 420 are not limited to the above, and may also be press-fitted into the first insertion groove 514 and the second insertion groove 515.

The first extension body 513 may have a higher rigidity than the first joining member 514a and the second joining member 515a and may be made of a material such as elastically deformable plastic. Accordingly, the first extension body 513 may be bent up and down in a process of inserting the first part 410 and the second part 420 into the first insertion groove 514 and the second insertion groove 515, allowing the first part 410 and the second part 420 to be smoothly inserted into the first insertion groove 514 and the second insertion groove 515.

As a pressure greater than a set amount is applied to the second plate 300 in the first direction due to a battery cell 100 exploding, the first part 410 and the second part 420 may be separated from the first insertion groove 514 and the second insertion groove 515.

As the pressure greater than the set amount is applied to the second plate 300 in the first direction due to the battery cell 100 exploding, the first extension body 513 may be separated from the first fixed body 512. Accordingly, the first extension body 513 may guide the first part 410 and the second part 420 to be more smoothly separated from the first insertion groove 514 and the second insertion groove 515 when the battery cell 100 explodes.

The first holder 510 may further include a first notch 516.

The first notch 516 may be formed to be recessed into the first holder body 511. The first notch 516 may function as a component for guiding the first extension body 513 to be separated from the first fixed body 512 when the battery cell 100 explodes. The first notch 516 may be disposed between the first fixed body 512 and the first extension body 513 or at one end of the first extension body 513 connected to the first fixed body 512. The first notch 516 may be formed to gradually narrow in width toward the end thereof.

The second holder 520 may be spaced apart from the first holder 510 and support the connection part 430 with respect to the first plate 200.

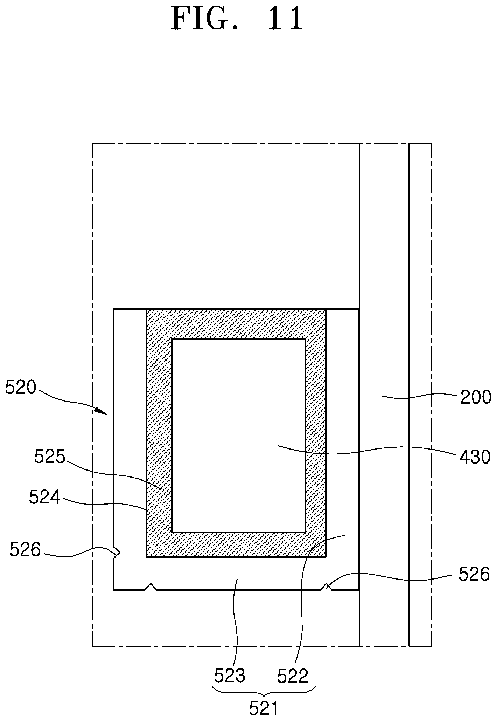

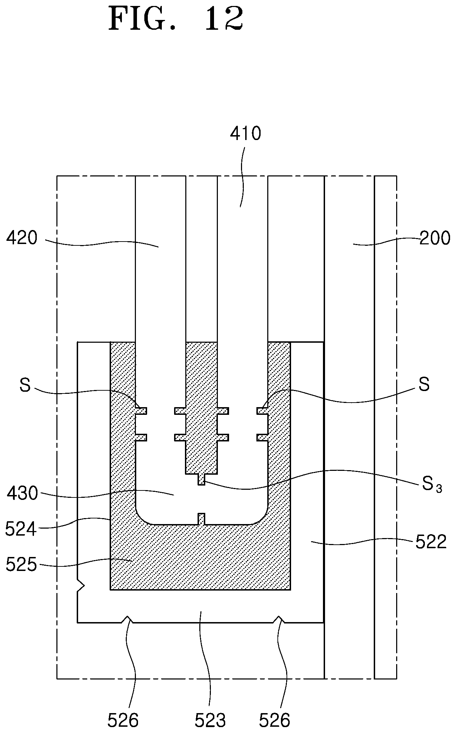

FIG. 11 is a front cross-sectional view schematically illustrating a configuration of a second holder according to an embodiment of the present disclosure, and FIG. 12 is a plan cross-sectional view schematically illustrating the configuration of the second holder according to an embodiment of the present disclosure.

Referring to FIGS. 11 and 12, the second holder 520 may include a second holder body 521, an accommodating groove 524, and a support member 525.

The second holder body 521 may generally form an exterior of the second holder 520 and provide a space for accommodating the connection part 430 therein.

The second holder body 521 may include a second fixed body 522 and a second extension body 523.

The second fixed body 522 may be fixed to the first plate 200 and support the second extension body 523, which will be described below. The second fixed body 522 may be formed to have a substantially flat shape. The second fixed body 522 may be disposed parallel to the first direction and disposed so that one surface thereof faces an outer surface of the first plate 200 in parallel. The second fixed body 522 may be spaced apart from the first fixed body 512 in the direction parallel to the first direction, and may be disposed to face one side surface of the connection part 430 connected to the first part 410. One surface of the second fixed body 522 may be in contact with the outer surface of the first plate 200 and fixed to the outer surface of the first plate 200 by various coupling methods such as bolting, welding, insertion coupling, or the like.

The second extension body 523 may extend from the second fixed body 522, and may be disposed to surround the connection part 430. As an example, the second extension body 523 may be disposed to surround a lower end of the connection part 430, the other side surface of the connection part 430 connected to the second part 420, and an outer circumferential surface of the connection part 430. Accordingly, the second holder body 521 may be formed to have a box shape in which an upper surface and a surface through which the first part 410 and the second part 420 pass are open.

The accommodating groove 524 may be disposed inside the second holder body 521. The accommodating groove 524 may be an empty space surrounded by the second fixed body 522 and the second extension body 523. The connection part 430 may be inserted into the accommodating groove 524.

The support member 525 may be disposed inside the accommodating groove 524 and support the connection part 430 with respect to the accommodating groove 524. The support member 525 may be made of an elastically deformable material such as rubber, silicone, or the like. The support member 525 may fill an empty space between the accommodating groove 524 and the connection part 430, and may be in close contact with the second holder body 521 and the connection part 430 by its own elastic restoring force. Accordingly, the support member 525 may firmly fix the connection part 430 to the accommodating groove 524.

As a pressure greater than the set amount is applied to the second plate 300 in the first direction due to a battery cell 100 exploding, the connection part 430 may be separated from the accommodating groove 524 and the support member 525.

As the pressure greater than the set amount is applied to the second plate 300 in the first direction due to the battery cell 100 exploding, all or part of the second extension body 523 may be separated from the second fixed body 522. Accordingly, the second extension body 523 may guide the connection part 430 to be more smoothly separated from the accommodating groove 524 and the support member 525 when the battery cell 100 explodes.

The second holder 520 may further include a second notch 526.

The first notch 516 may be formed to be recessed into the second holder body 521. The second notch 526 may function as a component for guiding all or part of the second extension body 523 to be separated from the second fixed body 522 when a battery cell 100 explodes. A plurality of second notches 526 may be provided. The plurality of second notches 526 may be disposed to be spaced apart from each other along a circumferential surface of the second extension body 523. The second notch 526 may be formed to gradually narrow in width toward the end thereof.

Hereinafter, operation of the battery module 1 according to an embodiment of the present disclosure will be described.

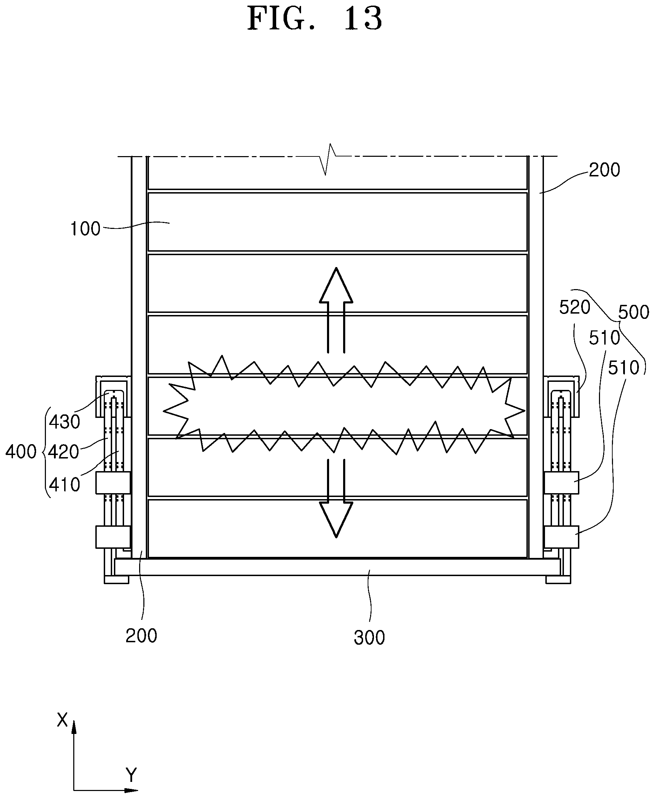

FIGS. 13 to 18 are views schematically illustrating an operation process of a battery module according to an embodiment of the present disclosure.

Referring to FIG. 13, when any one battery cell 100 explodes due to overcharging or the like, the pressure resulting from the explosion of the battery cell 100 is transmitted to the second plate 300 through adjacent battery cells 100 along the direction parallel to the first direction.

As a pressure greater than a set amount is applied to the second plate 300, the second plate 300 applies a tensile force to the second part 420 of the buffer member 400 in the direction parallel to the first direction.

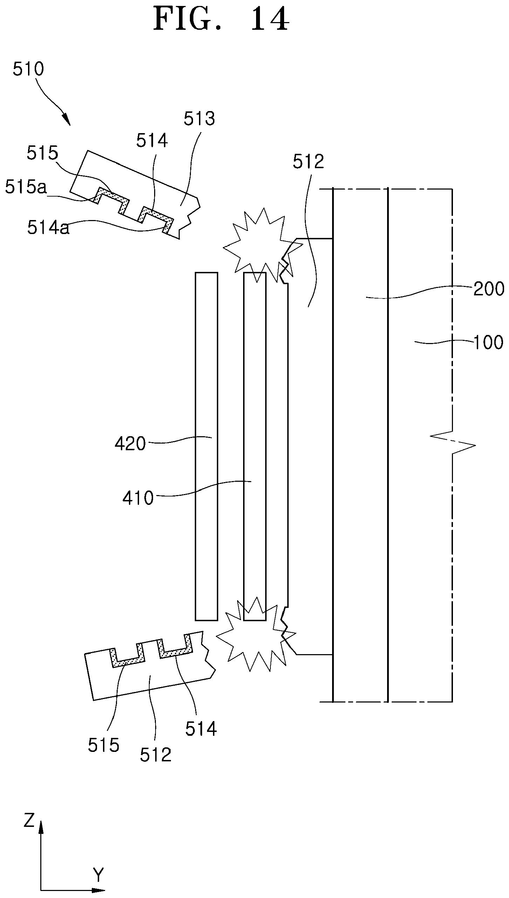

Referring to FIG. 14, the first extension body 513 may be separated from the first fixed body 512 by the tensile force applied to the second part 420, and the first part 410 and the second part 420 may be separated from the first insertion groove 514 and the second insertion groove 515, respectively.

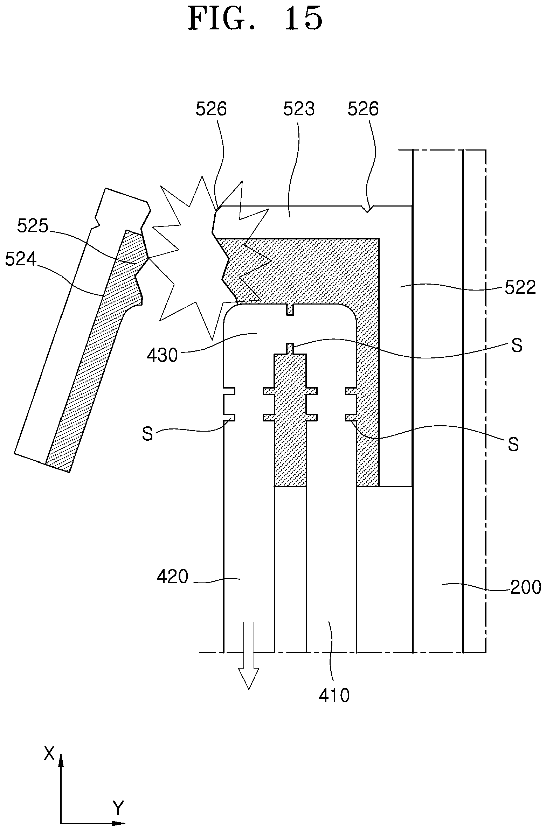

Referring to FIG. 15, a portion of the second extension body 523 may be separated from the second fixed body 522 by the tensile force applied to the second part 420, and the connection part 430 may be separated from the support member 525. In contrast, depending on the magnitude of the tensile force applied to the second part 420, the entire second extension body 523 may be separated from the second fixed body 522.

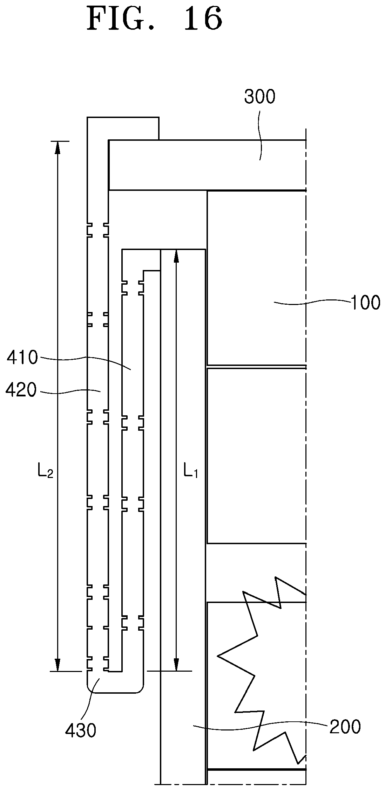

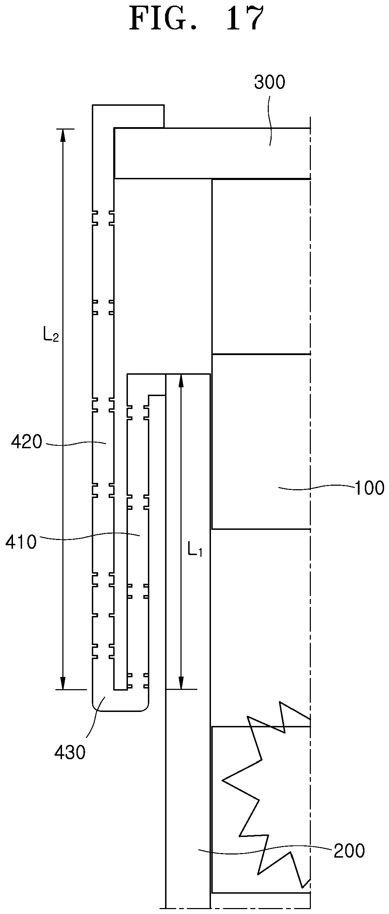

Referring to FIGS. 16 and 17, due to the tensile force applied to the second part 420, the length of the second part 420 may be increased, the length of the first part 410 may be decreased, and the second plate 300 may be spaced apart from the first plate 200 along the direction parallel to the first direction. In this case, as the length of the buffer member 400 is fixed, the connection part 430 may be moved together with the second plate 300 in the direction parallel to the first direction, and the slit S formed in the first part 410 may move from the first part 410 to the second part 420 through the connection part 430.

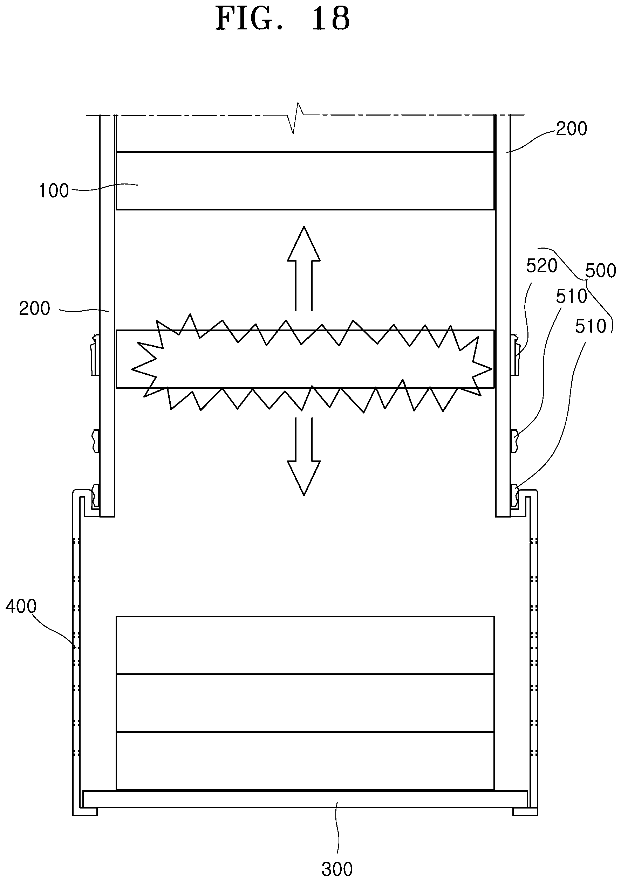

Referring to FIG. 18, as the second plate 300 moves in a direction away from the first plate 200, battery cells 100 disposed on both sides of the battery cell 100 where the explosion has occurred may be moved in a direction away from the battery cell 100 where the explosion has occurred along the first direction.

Accordingly, the pressure caused by the explosion of any one battery cell 100 may be relieved, and an empty space formed on both sides of the battery cell 100 may prevent heat from spreading to adjacent battery cells 100.

According to one or more embodiments of the present disclosure, when a battery cell explodes due to overcharging or the like, a second plate can be relatively moved in a direction away from a first plate, so that an internal space of a battery module can be expanded in a direction in which explosion pressure is transmitted and an amount of pressure applied to remaining battery cells can be reduced.

According to one or more embodiments of the present disclosure, when a battery cell explodes due to overcharging or the like, a space for delaying thermal propagation can be secured on both sides of the battery cell where the explosion has occurred, so that a chain ignition of adjacent battery cells can be prevented.

The present disclosure has been described with regard to some example embodiments and drawings, but the present disclosure is not limited thereto and it will be apparent to those skilled in the art that various modifications and changes may be made thereto within the technical scope of the present disclosure as defined by the appended claims.

## Claims

1. A battery module (1) comprising:
a plurality of battery cells (100) arranged along a first direction (X);
a pair of first plates (200) disposed to face the plurality of battery cells (100) and disposed parallel to the first direction (X);
a pair of second plates (300) disposed to face the plurality of battery cells (100) and disposed parallel to a second direction (Y) intersecting the first direction (X);
a buffer member (400) provided between a first plate (200) of the plurality of first plates (200) and a second plate (300) of the plurality of second plates (300) and configured to move the second plate (300) relative to the first plate (200) in a direction parallel to the first direction (X) when a battery cell (100) of the plurality of battery cells (100) explodes; and
a holder (500) connected to the buffer member (400) and configured to selectively limit relative movement of the second plate (300) with respect to the first plate (200).

2. The battery module (1) as claimed in claim 1, wherein a gap between the pair of first plates (200) is smaller than a width of the second plate (300) parallel to the second direction (Y).

3. The battery module (1) as claimed in claim 1 or 2, wherein the buffer member (400) includes:
a first part (410) connected to the first plate (200);
a second part (420) disposed to face the first part (410) and connected to the second plate (300); and
a connection part (430) disposed between the first part (410) and the second part (420).

4. The battery module (1) as claimed in claim 3, wherein first and second ends of the connection part (430) are connected to the first part (410) and the second part (420), respectively, and extend in a curved manner at a set curvature.

5. The battery module (1) as claimed in claim 3 or 4, wherein the first part (410) and the second part (420) are disposed so that longitudinal directions thereof are parallel to the first direction (X).

6. The battery module (1) as claimed in any one of claims 3 to 5, wherein the first part (410) and the second part (420) are spaced apart along the second direction (Y).

7. The battery module (1) as claimed in any one of claims 3 to 6, wherein when the battery cell (100) explodes, a length of the first part (410) decreases, a length of the second part (420) increases, and the connection part (430) moves in the direction parallel to the first direction (X).

8. The battery module (1) as claimed in any one of claims 3 to 7, further comprising a plurality of slits (S) arranged along an extension direction of the buffer member (400).

9. The battery module (1) as claimed in any one of claims 3 to 8, wherein the holder (500) comprises:
a first holder (510) configured to support the first part (410) and the second part (420) with respect to the first plate (200); and
a second holder (520) spaced apart from the first holder (510) and configured to support the connection part (430) with respect to the first plate (200).

10. The battery module (1) as claimed in claim 9, wherein the first holder (510) comprises:
a first holder body (511);
a first insertion groove (514) formed to be recessed into the first holder body (511) and into which the first part (410) is inserted; and
a second insertion groove (515) formed to be recessed into the first holder body (511) and into which the second part (420) is inserted, and
the first part (410) and the second part (420) are separated from the first insertion groove (514) and the second insertion groove (515), respectively, when a pressure equal to or greater than a set amount is applied to the second plate (300).

11. The battery module (1) as claimed in claim 10, wherein the first holder body (511) comprises:
a first fixed body (512) fixed to the first plate (200); and
a first extension body (513) extending from the first fixed body (512) in a direction parallel to the second direction (Y), and
the first insertion groove (514) and the second insertion groove (515) are formed in the first extension body (513).

12. The battery module (1) as claimed in 11, wherein the first extension body (513) is separated from the first fixed body (512) when a pressure equal to or greater than a set amount is applied to the second plate (300).

13. The battery module (1) as claimed in claim 11 or 12, wherein the first holder (510) further comprises a first notch (516) formed to be recessed into the first extension body (513) and spaced apart from the first insertion groove (514) and the second insertion groove (515).

14. The battery module (1) as claimed in any one of claims 9 to 13, wherein the second holder (520) comprises:
a second holder body (521) spaced apart from the first holder (510);
an accommodating groove (524) disposed inside the second holder body (521) and into which the connection part (430) is inserted; and
a support member (525) configured to support the connection part (430) inside the accommodating groove (524), and
the connection part (430) is separated from the accommodating groove (524) and the support member (525) when a pressure equal to or greater than a set amount is applied to the second plate (300).

15. The battery module (1) as claimed in claim 14, wherein the second holder body (521) comprises:
a second fixed body (522) fixed to the first plate (200); and
a second extension body (523) extending from the second fixed body (522) and disposed to surround the connection part (430), and
the second extension body (523) is separated from the second fixed body (522) when a pressure equal to or greater than a set amount is applied to the second plate (300).
